Europäisches Patentamt

(19) European Patent Office

Office européen des brevets

(11) Publication number: **0 461 839 A2**

# (12) EUROPEAN PATENT APPLICATION

(21) Application number: **91305216.3**

(51) Int. Cl.⁵: **F16D 65/24**

(22) Date of filing: **10.06.91**

(30) Priority: **13.06.90 GB 9013174**

(43) Date of publication of application:
**18.12.91 Bulletin 91/51**

(84) Designated Contracting States:
**BE DE ES FR GB IT NL SE**

(71) Applicant: **BENDIX LIMITED**
**Douglas Road**
**Kingswood, Bristol BS15 2NL (GB)**

(72) Inventor: **Dagger, Norman Philip**
**23 Vassall Road**
**Fishponds, Bristol BS16 2NL (GB)**
Inventor: **Windmill, Nicholas Jon**
**38 Springfield Avenue**
**Mangotsfield, Bristol BS17 3BJ (GB)**

(74) Representative: **Turner, Alan Reginald**
**BENDIX LIMITED Douglas Road**
**Kingswood, Bristol BS15 2NL (GB)**

(54) Improvements to compressed air operable brake actuator assemblies.

(57)    A compressed air operable wedge-brake actuator assembly has a linearly movable wedge 42 carrying an extension part 73 which receives a push rod part 56 of a compressed air actuator, the part 73 carrying a spring clip 61 which provides automatic locking together of the parts 56 and 73 upon assembling the complete actuator with the complete wedge mechanism and enabling namual release of the spring clip if desired for servicing the actuator or for other reasons.

EP 0 461 839 A2

Fig. 1.

This invention relates to compressed air operable brake actuator assemblies and relates especially but not exclusively to compressed air operable wedge-brake actuators for the brakes of wheeled vehicles.

Compressed air operable brake actuators are used in braking systems of modern road vehicles of meduim and heavy weights and where such actuators are required to operate disc brakes it is usual for an output rod of the actuator to be directly connected to a movable wedge which acts between mutually opposing roller members. The actuator wedge thereby acts to drive the roller members apart to apply a brake. Typically, one such actuator is provided for each braked wheel and a compact arrangement is possible because a pneumatically operable brake chamber can be mounted directly onto the wedge-brake mechanism itself with no intermediate brake lever.

One shortcoming of such an arrangement is that in some circumstances it may be required to assembly or disassemble the pneumatically operable brake chamber from the wedge-brake mechanism. This is not normally possible since the pneumatically operable actuator push rod is securely attached to the wedge mechanism because the pneumatic actuator moves the wedge element in both directions.

It is an object of the present invention to provide an improved compressed air operable actuator wherein the above shortcoming is removed or reduced.

According to the present invention there is provided a compressed air operable actuator assembly including a brake operating mechanism and a pneumatically operable actuator with a housing attachable to said mechanism, said actuator having a fluid pressure responsive member having an integral push-rod part movable thereby in the housing and being connected to an operating part of said mechanism to apply and release a brake, characterised in that said push-rod part is connected to said operating part via connection means which are assembleable or releasable without disassembling said actuator.

In order that the invention may be more clearly understood and readily carried into effect the same will be further described by way of example with reference to the accompanying drawing of which:

Fig. 1, illustrates in part-sectional diagramatic form a compressed air operable wedge-brake actuator assembly employing the present invention

Fig. 2, illustrates on an enlarged scale a part-section of a snap-in connection used in the assembly of Fig. 1

Fig. 3, illustrates in part-section an alternative arrangement using a screw-in adaptor.

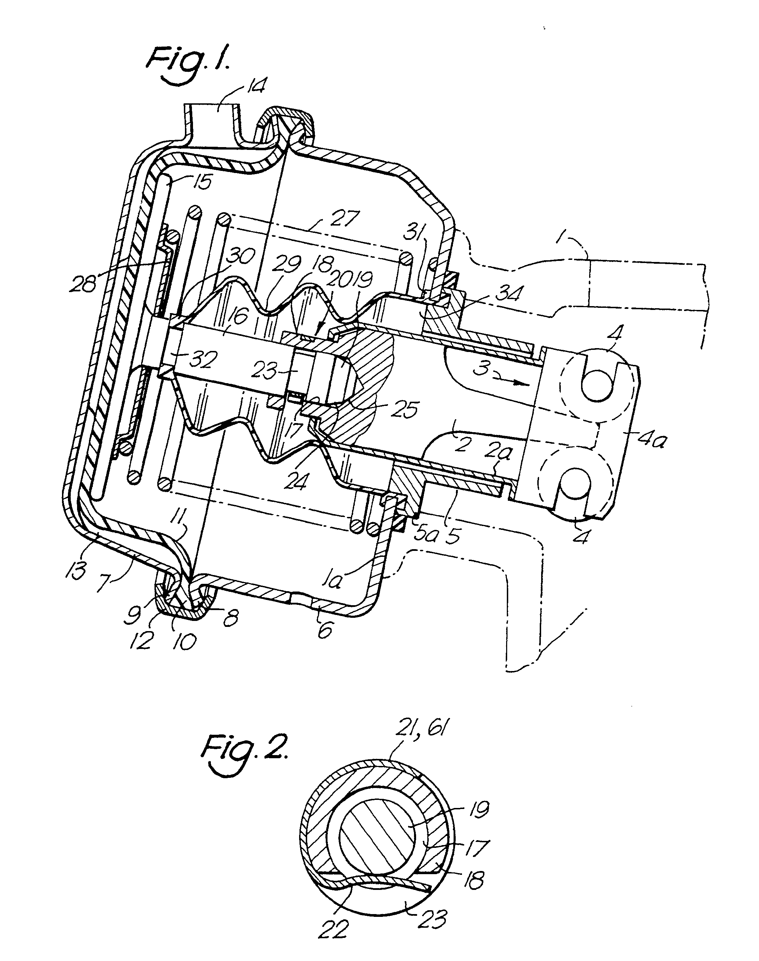

Referring to Fig. 1, the broken outline 1 represents a generally known form of wedge-brake actuator mechanism of which typically one is provided for each braked wheel of the respective vehicle. The mechanism includes a wedge element 2 guidingly movable within a tubular shell 2a in the direction of arrow 3 and between rollers 4 the spacing between which is thereby forcibly increased to apply a disc brake (not shown). The rollers are guided in a block 4a which is movable in the same direction at half the speed of the wedge element relative to a tubular plastic guide and stop piece 5. The latter has a shaped flange 5a which is retained between flange 1a of the body of mechanism 1 and the rear part of a pneumatic actuator. The latter is mounted by studs (not shown) to the flange surface 1a. The actuator comprises a housing formed of the non-pressurable part 6 and a pressurable part 7 with respective annular projections 8 and 9 between which a bead 10 of a dished diaphragm 11 is clamped by a clamping ring 12. The clamping ring is provided with at least one break and a pinch-bolt (not shown) by means of which it is assembled to and clamped around the projections 8 and 9 to sealingly grip the diaphragm 11 and form a pressure chamber 13 between the diaphragm and the pressurable part 7, the latter having a compressed air input port 14. The compressed air actuator has a disc-shaped push plate 15 having a push rod 16 concentrically welded at right angles to the plate 15. Moreover the rod 16 has its other end 19 securable in a blind axial bore or recess 17 provided in a projection 18 of the outer end of the wedge element 2. The projection 18 has a peripheral groove 20 for receiving a spring clip 21 of square of rectangular section and so shaped as more clearly illustrated in Fig. 2, as to provide a radially inwardly formed locking piece 22 snugly receivable in a deeper cut 26. The locking piece 22 is thereby engageable with negligible clearance in a peripheral groove 23 of the push rod 16, to lock the latter in position within the wedge element 2.

The end 19 of the push rod is rounded or provided with a double taper as at 24 and 25, the taper 24 enabling the end 19 to slidingly deflect the clip portion 22 radially outwards on assembly. The taper 25 provides positive engagement with a complimentary conical surface within the recess 17.

The actuator is further provided with a return spring 27 captive between the non-pressurable part 6 and the push plate 15, being located thereon via a positioning disc 28. The coil diameter of the spring 27 is sufficiently great to clear a compressible injection moulded gaiter 29 provided with beads 30 and 31 locating respective at one end in an annular groove of rod 16 and at the other end around the periphery of the aperture 34 of the non-pressure portion of the actuator.

In operation, compressed air applied to the port 14 acts of the diaphragm to deflect the pressure plate 15 against the force of return spring 27 enabling the push rod 16 to drive the wedge element 2 right-wardly within the tubular shell 29 and between rollers 4 to apply the brakes with a force dependent upon the magnitude of the applied pressure. Upon venting of the applied pressure, the force of spring 27 acts upon the pressure plate 15 and the end 19 of the push rod, being locked into the wedge element 2 by the snap-in arrangement illustrated in Figs. 1 and 2, causes the wedge element to be withdrawn and the mechanism 15 returned to the position shown.

In the event that it is required to disassemble the pneumatic actuator comprising housing parts 6 and 7 together with the spring 27, push plate 15 with its push rod 15 diaphragm 11 and boot 28 as one unit for subsequent quick assembly to the brake mechanism 1 the present invention enables this readily to be achieved by virtue of the snap-in connection between the rod 16 and wedge element 2. After effecting such snap-in connection the non-pressure part 6 is readily reconnected to the flange 1a of the wedge mechanism by the studs which are not shown.

In the event that it is required easily to inspect or change the size of the compressed air actuator the mounting studs (not shown) of the part 6 to the flange 5 may be released by removing the nuts (not shwon) therefrom and application of compressed air to the port 14 will readily effect sufficient separation of part 6 from flange 5 to reveal the projection 18 of the wedge element. It is then possible to manually release the clip 21 to permit withdrawal of the rod 16 from the wedge element 2.

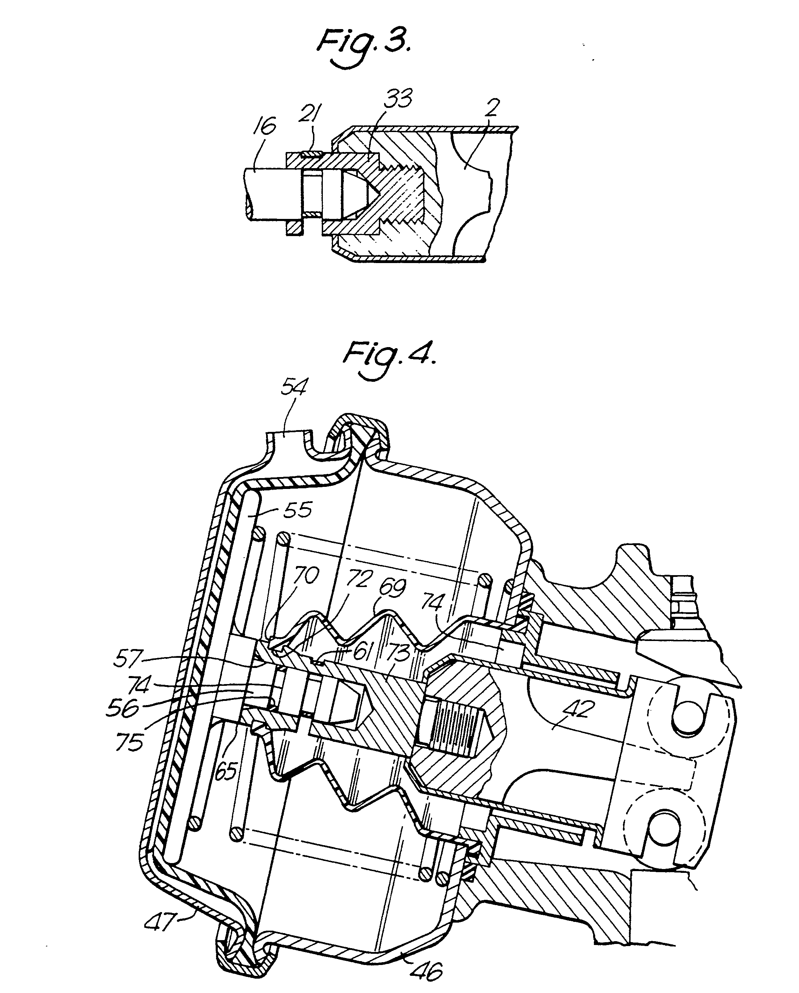

In an alternative arrangement as shown in Fig. 3, the projection 18 of the wedge element may be replaced by a screw-in insert 33 adapted to receive the rod 16 in the same manner as described above.

In a preferred arrangement such as that illustrated in Fig. 4, a screw-in projection of the wedge element 42 is denoted by reference 73. This projects further leftwards into the pneumatic actuator contained by parts 46 and 47, which along with the other principal parts correspond to parts described above with reference to Fig. 1. The principal difference in the arrangement of Fig. 4 is that the part 73 extends sufficiently leftwards to itself receive, in a groove 72, the head 70 of gaiter 69. In addition, the push rod 56 which is welded to the back of the push plate is correspondingly shorter and is further provided with an annular groove 74 to accommodate a radially compressible O-ring 75 which thereby provides firm and rattle-free location of the rod 56 within the bore 57. Axial force transmission between push plate 55 and the wedge element 42 takes place via an abutment at 65 with the annular end face of the extension 73 and only one taper 64 is now provided at the right hand end of the rod 56.

The embodiment of Fig. 4 offers greater ease of assembly as between the completely assembled pneumatic actuator and the wedge-brake assembly.

The latter is first assembled together with the extension 73 and the gaiter 69 whilst the pneumatic actuator is also assembled presenting the aperture 74 in the non-pressure part ready to receive the gaiter 61 with the extension 73 of the wedge brake assembly. This extension then readily locates its bore 57 with the push rod 56 and they are readily driven into locking engagement by virtue of the spring clip 61 which is identical to the clip illustrated in Fig. 2.

In order to dis-assemble the arrangement of Fig. 4 after release of the fixing studs (not shown) application of some air pressure at the input port 54 acts to bring the clip 61 to a position near the opening 74 to permit 61 to be manually removed. The pneumatic part may then be removed from the wedge-brake assembly for service or inspection.

In another embodiment of the invention the push plate 55 (Fig. 4) could be provided with a push rod of sufficient diameter to accommodate a bore or recess to lockingly receive a spigot forming or carried by an extension of the wedge element 42. In that case the push road would carry means such as clip 61 for lockingly locating the said extension therein.

## Claims

1. A compressed air operable actuator assembly including a brake operating mechanism and a pneumatically operable actuator with a housing attachable to said mechanism, said actuator having a fluid pressure responsive member having an integral push rod part movable thereby in the housing and being connected to an operating part (2; 42) of said mechanism to apply and release a brake, characterised in that said push rod part (16; 56) is connected to said operating part via connection means (21, 23; 61,63) which are assembleable or releasable without disassembling said actuator.

2. A compressed air operable actuator assembly as claimed in claim 1, characterised in that one said part has a bore or recess (17; 57) which receives the other part (16; 56).

3. A compressed air operable actuator assembly as claimed in claim 2, characterised in that said push rod (16; 56) is provided with an external groove (23; 63) engageable by a locking piece (21; 61) located in said operating part (2; 73).

4. A compressed air operable actuator assembly as claimed in claim 2, characterised in that said locking piece is provided by an externally carried spring clip (21; 61) having a portion (21; 61) which penetrates one said part (16; 56) via a slot (26) to engage a groove in the other said part for locking the push rod (16; 56) and the member (2; 42).

5. A compressed air operable actuator assembly as claimed in claim 4 characterised in that said push rod part is provided with a taper (24) which slidingly deflects said clip upon insertion of the rod part into the bore or recess.

6. A compressed air operable actuator as claimed in claims 2, 3, 4 or 5, characterised in that a resiliently radially compressible member (74) is located in compression between said parts.

Fig.1.

Fig.2.

*Fig. 3.*

*Fig. 4.*

7